# EUROPÄISCHE PATENTSCHRIFT

(11) **EP 3 328 701 B1**
(45) Veröffentlichungstag und Bekanntmachung des Hinweises auf die Patenterteilung: **08.04.2020**
(21) Anmeldenummer: 16745101.2
(22) Anmeldetag: 28.07.2016
(51) Int. Cl.: B60T 17/04

(54) **KUPPLUNGSSYSTEM, INSBESONDERE KUPPLUNGSSYSTEM ZUR PNEUMATISCHEN VERBINDUNG EINER PNEUMATISCHEN BREMSANLAGE EINES ZUGFAHRZEUGES UND EINES ANHÄNGERS**
COUPLING SYSTEM, IN PARTICULAR A COUPLING SYSTEM FOR PNEUMATICALLY CONNECTING A PNEUMATIC BRAKE SYSTEM OF A TOWING VEHICLE AND A TRAILER
SYSTÈME D'ACCOUPLEMENT, EN PARTICULIER SYSTÈME D'ACCOUPLEMENT POUR RELIER PNEUMATIQUEMENT UN SYSTÈME DE FREINAGE PNEUMATIQUE D'UN VÉHICULE TRACTEUR ET D'UNE REMORQUE

(30) Priorität: 30.07.2015 DE 102015112487
(43) Veröffentlichungstag der Anmeldung: 06.06.2018
(73) Patentinhaber: KNORR-BREMSE Systeme für Nutzfahrzeuge GmbH, 80809 München (DE)
(72) Erfinder: KONCZ, Laszlo, 6000 Kecskemét (HU); FARKAS, Gabor, 6000 Kecskemét (HU)
(86) Internationale Anmeldenummer: PCT/EP2016/067977
(87) Internationale Veröffentlichungsnummer: WO 2017/017170

(56) Entgegenhaltungen:
- DE-A1- 2 833 834

## Beschreibung

Die vorliegende Erfindung betrifft ein Kupplungssystem, insbesondere ein Kupplungssystem zur pneumatischen Verbindung einer pneumatischen Bremsanlage eines Zugfahrzeuges und eines Anhängers.

Ein derartiges Zugfahrzeug kann beispielsweise ein Nutzfahrzeug wie ein Lastkraftwagen mit einer pneumatischen Bremsanlage sein.

Aus dem Stand der Technik sind bereits Kupplungssysteme mit Kupplungsköpfen zur pneumatischen Verbindung der Bremsanlage eines Zugfahrzeugs und eines Anhängers bekannt. Diese Systeme weisen eine Filtereinheit zur Filterung der den Kupplungskopf durchströmenden Druckluft auf.

Ein derartiger Kupplungskopf ist beispielsweise aus der DE 199 31 162 A1 oder aus der DE 2833834 A1 bekannt.

Aus der DE 10 2009 036 619 A1 ist beispielsweise ein Kupplungskopf zur pneumatischen Verbindung der Bremsanlage eines Zugfahrzeugs und eines Anhängers bekannt, bei dem eine Ventileinrichtung vorgesehen ist, welche bei einem ein vorgegebenes Maß von Verunreinigung übersteigendes Maß von Verunreinigung der Filtereinheit diese mittels Bypassverbindungen derart schaltet, dass die durch den Kupplungskopf strömende Druckluft nicht mehr durch den Filter der Filtereinheit, sondern durch die Bypassverbindungen strömt.

Die aus dem Stand der Technik bekannten Lösungen erfordern aber im Zusammenhang mit dem Austausch bzw. der Wartung der Filtereinheit bauartbedingt eine aufwendige vollständige Demontage des Kupplungskopfes.

Es ist daher die Aufgabe der vorliegenden Erfindung, ein Kupplungssystem der eingangs genannten Art in vorteilhafter Weise weiterzubilden, insbesondere dahingehend, dass die Wartung eines Kupplungssystems, insbesondere eines Kupplungssystems zur pneumatischen Verbindung einer pneumatischen Bremsanlage eines Zugfahrzeuges und eines Anhängers vereinfacht und zugleich das Kupplungssystem strukturell vereinfacht und gewichts-, material- und montagezeitsparend ausgebildet werden kann.

Diese Aufgabe wird erfindungsgemäß gelöst durch ein Kupplungssystem mit den Merkmalen des Anspruchs 1. Danach ist vorgesehen, dass das Kupplungssystem wenigstens einen Kupplungskopf mit einem Kupplungskopfgehäuse aufweist, wobei das Kupplungskopfgehäuse wenigstens einen ersten Koppelungsanschluss, wenigstens einen zweiten Koppelungsanschluss und wenigstens eine Einsatzausnehmung aufweist, die gesondert in Bezug auf den ersten Koppelungsanschluss und den zweiten Koppelungsanschluss im Kupplungskopfgehäuse angeordnet ist, und wobei das Kupplungssystem weiter eine in die Einsatzausnehmung lösbar einsetzbare Filtereinheit aufweist, wobei weiter im montierten Zustand des Kupplungssystems ein Teil der Filtereinheit eine Dichtungsfläche eines Koppelungsanschlusses bereitstellt.

Die Erfindung basiert auf dem Grundgedanken, dass die Filtereinheit des Kupplungssystems nicht in einen der Koppelungsanschlüsse bzw. über einen der Koppelungsanschlüsse in das Kupplungskopfgehäuse eingesetzt ist und dass durch die gesondert einsetzbare Filtereinheit ein Teil der Dichtung eines Koppelungsanschlusses bereitgestellt wird. Stattdessen soll die Filtereinheit unabhängig vom Montagezustand des Kupplungssystems und insbesondere auch im montierten Zustand gewechselt werden können. Hierzu wird die Filtereinheit als Einsetzteil in eine Einsatzausnehmung im Kupplungskopfgehäuse lösbar eingesetzt. Dadurch wird es möglich, die Filtereinheit jederzeit austauschen bzw. aus dem Kupplungsgehäuse herausnehmen zu können. Durch die separate Einsatzausnehmung wird neben den beiden Koppelungsanschlüssen ein weiterer Zugang zu dem wenigstens einen Pneumatikkanal im Inneren des Kupplungskopfgehäuses geschaffen, der die beiden Koppelungsanschlüsse miteinander verbindet. Der Einsatz der Filtereinheit in die Einsatzausnehmung ermöglicht es somit, die Filtereinheit derart im Pneumatikkanal zwischen den beiden Koppelungsanschlüssen zu positionieren, dass im Normalbetrieb das von einem Koppelungsanschluss zum anderen Koppelungsanschluss strömende Medium, z.B. Druckluft, durch die Filtereinheit geführt und dadurch gefiltert wird. Dadurch wird es möglich, eine gesonderte Dichtung für den Koppelungsanschluss entfallen lassen zu können. Des Weiteren ermöglicht es eine derartige Gestaltung, dass die Dichtungsfläche mit der Filtereinheit einfach entfernt und damit auch getauscht werden kann. Durch die Bereitstellung der Dichtungsfläche durch die Filtereinheit kann die Dichtigkeit des Kupplungskopfes bzw. des Koppelungsangschlusses einfach sichergestellt und geprüft werden. Wenn ein Austausch der Dichtung notwendig wird, kann dies durch einfache Handgriffe, nämlich durch einen Ausbau der Filtereinheit erfolgen. Dies kann z.B. auch durch den Fahrer des Nutzfahrzeugs vorgenommen werden. Erfindungsgemäß wird es also insbesondere möglich, dass die Wartung eines Kupplungssystems, insbesondere eines Kupplungssystems zur pneumatischen Verbindung einer pneumatischen Bremsanlage eines Zugfahrzeuges und eines Anhängers vereinfacht und zugleich das Kupplungssystem strukturell vereinfacht und gewichts-, material- und montagezeitsparend ausgebildet werden kann.

Des Weiteren kann vorgesehen sein, dass die Filtereinheit einen Filterträger mit einem Sieb, wenigstens einen Bypassventildurchbruch, wenigstens einen Bypassventilsitz, wenigstens eine Elastomereinheit mit Ventillippen und wenigstens ein Verschlussstück aufweist. Dieser Aufbau ermöglicht eine einfache Struktur der Filtereinheit mit einer Bypassventilfunktion. Darüber hinaus ist eine kompakte Struktur der Filtereinheit möglich.

Der Filterträger wird zusammen mit dem Sieb hergestellt oder das Sieb wird nachträglich eingebaut und im Filterträger fixiert.

Außerdem ist möglich, dass die Filtereinheit eine vormontierte Filtereinheit ist. Dadurch wird die Handhabung der Filtereinheit und ihr Austausch bzw. ggf. ihre Reinigung und Wiederverwendung vereinfacht. Die vormontierte Filtereinheit kann vor dem Einbau ins Kupplungskopfgehäuse kontrolliert oder auch z.B. bezüglich der Öffnungsdrücke der Lippenventile getestet werden. Bei Reinigung der Filtereinheit oder bei Beschädigung kann die Filtereinheit einfach ausgebaut, gereinigt, aber auch getauscht werden. Außerdem ist kein weiterer (Schalt-)Deckel sowie eine Deckelbefestigung (üblicherweise Verschraubung) nötig, was zu einer material-, gewicht- und montagezeitsparenden Ausbildung des Kupplungssystems führt.

Dabei kann die Filtereinheit eine fertig für den Einsatz in die Einsatzausnehmung vormontierte Filtereinheit sein. Dies erleichtert den Einbau und auch den Ausbau der Filtereinheit in das Kupplungskopfgehäuse des Kupplungssystems. Diese Ausführungsform ermöglicht es auch, dass keine weitere Dichtung nötig ist. Ferner kann die Zahl der Teile und damit das Gewicht, der Materialaufwand und die Montagezeit minimal gehalten werden.

Das Kupplungssystem kann in vorteilhafter Ausführung keine Metallfeder aufweisen. Dabei kann insbesondere vorgesehen sein, dass die Verbindungsfläche des Kupplungskopfes außer Betrieb mit einer Kappe geschützt sein kann. Üblicherweise war im Stand der Technik eine vergleichbare Kappe begrenzt drehbar und aufhebbar auf dem Ansatz des Gehäuses gelagert und mit einer Feder gegen Aufheben vorgespannt. Die Kappe kann nun beispielsweise aus elastischem Kunststoffmaterial ausgebildet und die Lagerungshülse kann beispielsweise geschlitzt ausgeführt sein, um die Flexibilität zu sichern. Dadurch wird ein sicheres Schließen und Öffnen ohne Metallfeder bzw. Vorspannfeder möglich. Folglich wird vorteilhafterweise ein Bauteil eingespart und es besteht auch nicht mehr das Problem, dass die als Vorspannfeder eingesetzt Metallfeder korrodieren kann. Des Weiteren kann eine Verschmutzung Drehlagerung das Verdrehen der Kappe nicht stoppen.

Einer der beiden Koppelungsanschlüsse und die Einsatzausnehmung können koaxial angeordnet sein. Dadurch ergibt sich der Vorteil, dass der Koppelungsanschluss und die Einsatzausnehmung zumindest teilweise eine gemeinsame Bohrung im Kupplungskopfgehäuse nutzen können. Dies vereinfacht die Herstellung des Kupplungskopfgehäuses und senkt damit auch die Herstellungskosten.

Die Filtereinheit kann somit beispielsweise entgegengesetzt zu einem Koppelungsanschluss im Kupplungskopfgehäuse angeordnet sein.

Insbesondere ist möglich, dass die Elastomereinheit die Dichtungsfläche ausbildet. Dies ermöglicht eine weitere Funktionsintegration in ein Bauteil der Filtereinheit und ermöglicht so insgesamt einen einfachen Aufbau der Filtereinheit und des Kupplungssystems.

Des Weiteren kann vorgesehen sein, dass das Verschlussstück formschlüssig in der Einsatzausnehmung lösbar befestigbar ist. Dadurch wird ein einfacher Einbau und Ausbau der Filtereinheit in bzw. aus dem Kupplungskopfgehäuse möglich.

Insbesondere ist möglich, dass das Verschlussstück und die Einsatzausnehmung nach Art eines Bajonettverschlusses miteinander verbindbar sind. Dies ist ermöglicht einen zuverlässigen Verschluss, der auch bei den auftretenden Drücken im Kupplungssystem zuverlässig schließt.

Außerdem kann vorgesehen, dass der Bypassventildurchbruch und der Bypassventilsitz und die Elastomereinheit mit den Ventillippen ein Bypassventil ausbilden, das bei einer Verunreinigung, die ein vorgegebenes Maß an Verunreinigung der Filtereinheit übersteigt, den Bypassventildurchbruch freigibt. Dadurch wird es möglich, trotz ganz oder teilweise verstopfter Filtereinheit die Funktion des Kupplungssystems aufrecht zu erhalten.

Weitere Einzelheiten und Vorteile der Erfindung sollen nun anhand eines in den Zeichnungen dargestellten Ausführungsbeispiels näher dargestellt werden. Es zeigen:
- Fig. 1: eine perspektivische Ansicht auf ein erfindungsgemäßes Ausführungsbeispiels eines Kupplungssystems;
- Fig. 2: eine perspektivische Ansicht auf eine Filtereinheit des Kupplungssystems gemäß Fig. 1;
- Fig. 3: eine perspektivische Explosionsdarstellung der Filtereinheit gemäß Fig. 2;
- Fig. 4: eine weitere perspektivische Ansicht auf das Kupplungssystem gemäß Fig. 1;
- Fig. 5: eine weitere perspektivische Ansicht auf das Kupplungssystem gemäß Fig. 1; und
- Fig. 6: eine perspektivische Ansicht auf eine Kappe des Kupplungssystems gemäß Fig. 1.

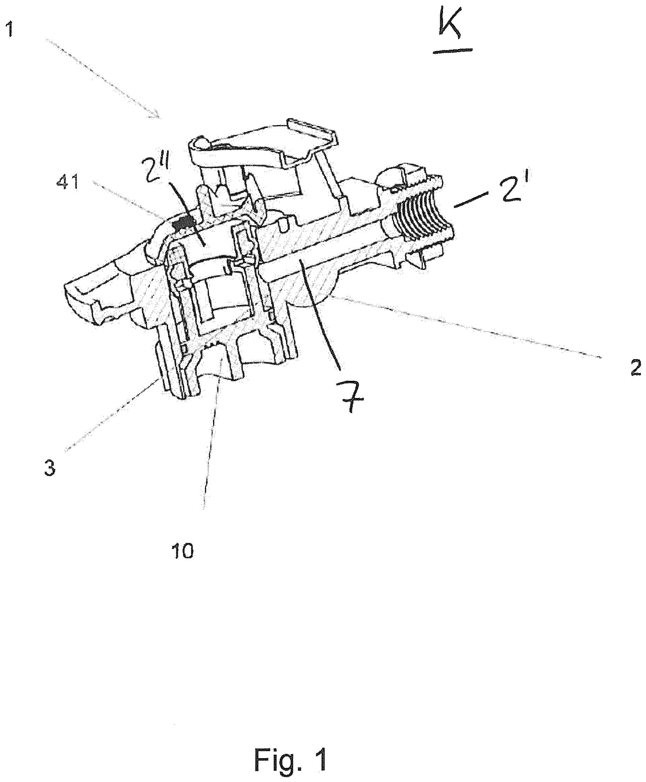

**Fig. 1** zeigt eine perspektivische Ansicht auf ein erfindungsgemäßes Ausführungsbeispiel eines Kupplungssystems K.

Das Kupplungssystem K ist in der gezeigten Ausführungsform ein Kupplungssystem K zur pneumatischen Verbindung einer pneumatischen Bremsanlage eines Zugfahrzeuges und des Anhängers (jeweils nicht näher dargestellt). Bei dem Zugfahrzeug kann es sich beispielsweise um ein Nutzfahrzeug wie einen Lastkraftwagen mit einer pneumatischen Bremsanlage und bei dem Anhänger um einen pneumatisch gebremsten Anhänger des Nutzfahrzeugs handeln.

Das Kupplungssystem K weist eine Kupplungskopf 1 mit einem Kupplungskopfgehäuse 2 auf.

Das Kupplungskopfgehäuse 2 weist einen ersten Koppelungsanschluss 2' und einen zweiten Koppelungsanschluss 2" auf.

Dieser erste Koppelungsanschluss 2' weist einen Gewindeansatz auf, der beispielsweise zum Anschluss des Koppelungsanschlusses 2' an das Pneumatiksystem des Zugfahrzeugs dient.

Der zweite Koppelungsanschluss 2" dient im gezeigten Ausführungsbeispiel zum anhängerseitigen Anschluss.

Weiter ist eine Einsatzausnehmung 3 vorgesehen, die zwischen dem ersten Koppelungsanschluss 2' und dem zweiten Koppelungsanschluss 2" angeordnet ist.

Das Kupplungssystem K weist weiter eine in die Einsatzausnehmung 3 lösbar einsetzbare Filtereinheit 10 auf.

Ein Pneumatikkanal 7 im Inneren des Kupplungskopfgehäuses 2 verbindet den ersten Koppelungsanschluss 2' mit dem zweiten Koppelungsanschluss 2".

Der Pneumatikkanal 7 ist senkrecht in Bezug auf die Einsatzausnehmung 3 angeordnet.

Der zweite Koppelungsanschluss 2" und die Einsatzausnehmung 3 sind koaxial angeordnet, so dass für diese Elemente des Kupplungssystems K zumindest großteils, nämlich im mittleren Bereich der Einsatzausnehmung 3 dieselbe Bohrung verwendet werden kann.

Die Filtereinheit 10 wird somit genau entgegengesetzt zum zweiten Koppelungsanschluss 2" in das Kupplungskopfgehäuse 2 eingesetzt.

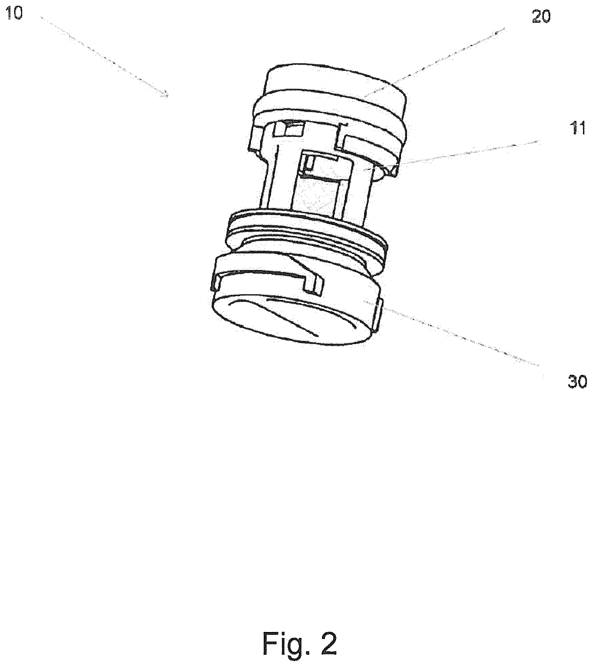

Die Filtereinheit 10 bildet zusammen mit der Elastomer-Einheit 20 mit Ventillippen und mit dem Verschlussstück 30 (vgl. Fig. 2) zusammen eine vormontierte Einheit, was nicht mehr von der Koppelungsseite des Kupplungskopfes 1, aber von der anderen Seite (von unten) eingelegt und im Gehäuse 2 des Kupplungskopfes 1 (lösbar) fixiert ist.

Eine Kappe 41 ist an dem zweiten Koppelungsanschluss 2" angeordnet und deckt im gezeigten Zustand (Zustand "außer Betrieb") die Verbindungsfläche 40 (z.B. Verbindung zum nicht näher dargestellten anhängerseitigen Kupplungskopf) des Kupplungskopfes 1 ab.

Wie in der DE 10 2009 036 619 A1 beschrieben, ist es grundsätzlich möglich, das Kupplungssystem K analog sowohl für ein Zugfahrzeug als auch für einen Anhänger zu verwenden. Denn die Strömungsrichtung z.B. der Druckluft durch das Kupplungssystem kann umgekehrt werden, da im Betrieb ein erster Kupplungskopf üblicherweise mit einem weiteren Kupplungskopf verbunden wird. Die beiden Kupplungsköpfe können baugleich ausgeführt sein.

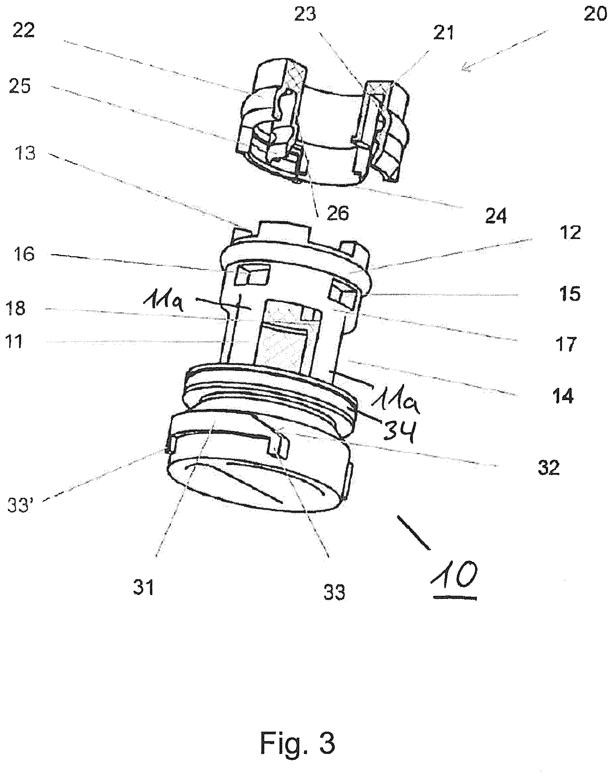

**Fig. 2** zeigt eine perspektivische Ansicht auf die Filtereinheit 10 des Kupplungssystems K und **Fig. 3** eine perspektivische Explosionsdarstellung der Filtereinheit gemäß Fig. 2.

Die Filtereinheit 10 weist einen Filterträger 11, eine Elastomer-Einheit 20 und einen Verschlussstück 30 auf.

Die Filtereinheit 10 ist als vormontierte Einheit ausgebildet und vormontiert ins Kupplungskopfgehäuse 2 eingebaut.

Mit anderen Worten ist die Filtereinheit 10 eine fertig für den Einsatz in die Einsatzausnehmung 3 vormontierte Filtereinheit 10.

Der im Wesentlichen zylindrische Filterträger 11 weist eine Ringrippe 12, eine Kontaktfläche 13, ein Sieb 14, Bypassventil-Durchbrüche 15, 16 und Bypass-Sitze 17, 18 auf.

Die gezahnte Kontaktfläche 13 bildet ein Ende des Filterträgers 11, das im montierten Zustand dafür vorsehen ist, dass hierauf die Elastomer-Einheit 20 aufgesetzt wird.

An die Kontaktfläche 13 schließt die Ringrippe 12 an. Benachbart zur Ringrippe 12 sind die Bypassventil-Durchbrüche 15, 16 angeordnet. Die Ringrippe 12 befindet sich damit zwischen der Kontaktfläche 13 und den Bypassventil-Durchbrüchen 15, 16.

Im Anschluss an die Bypassventil-Durchbrüche 15, 16 und die Bypass-Sitze 17, 18 weist der Filterträger 11 mehrere Stege 11a auf.

Die Stege 11a sind mit dem Sieb 14 verbunden und bilden gemeinsam einen im Wesentlichen zylindrischen Filterraum aus.

Die Elastomer-Einheit 20 ist als ringartiges Dichtelement ausgebildet und weist neben Ventillippen 24, 25 eine Dichtfläche 21 auf, die durch eine radial sich erstreckende Oberfläche des Teils der Elastomer-Einheit 20 ausgebildet wird, der die beiden Ventillippen 24, 25 miteinander verbindet.

Des Weiteren weist die Elastomereinheit eine als Dichtfläche fungierende Fläche 22, eine Ringnut 23 und eine innere Fläche 26 auf, deren Funktion nachfolgend beschrieben wird.

Das Verschlussstück 30 weist zur Ausbildung eines Teils eines Bajonettverschlusses eine Hebung 31, eine Schräge 32 sowie Sicherungsansätze 33, 33' auf.

Des Weiteren trägt das Verschlussstück 30 einen O-Ring 34.

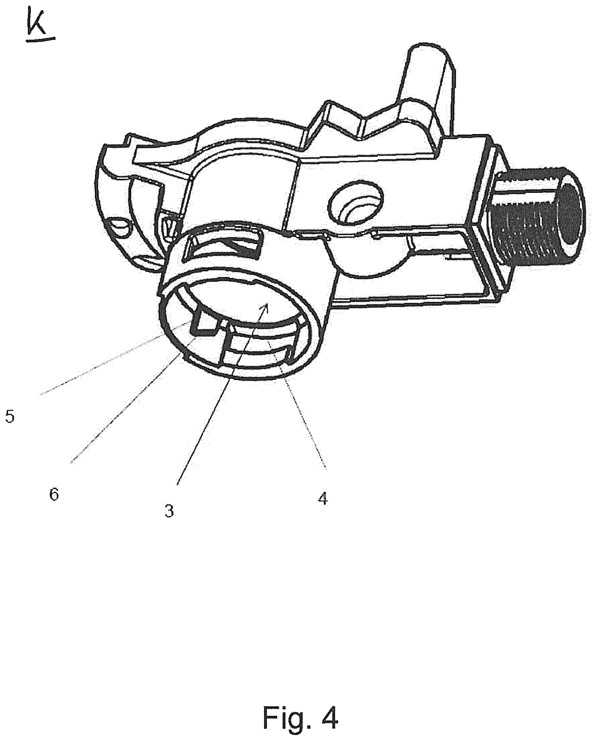

**Fig. 4** zeigt eine weitere perspektivische Ansicht auf das Kupplungssystem gemäß Fig. 1.

Das Gegenstück zum Verschlussstück 30, das einen Teil des Bajonettverschlusses ausbildet, findet sich im Eingangsbereich der Einsatzausnehmung 3. Dort sind eine Auflagehebung 4, eine Nase 5 sowie eine Schräge 6 vorgesehen.

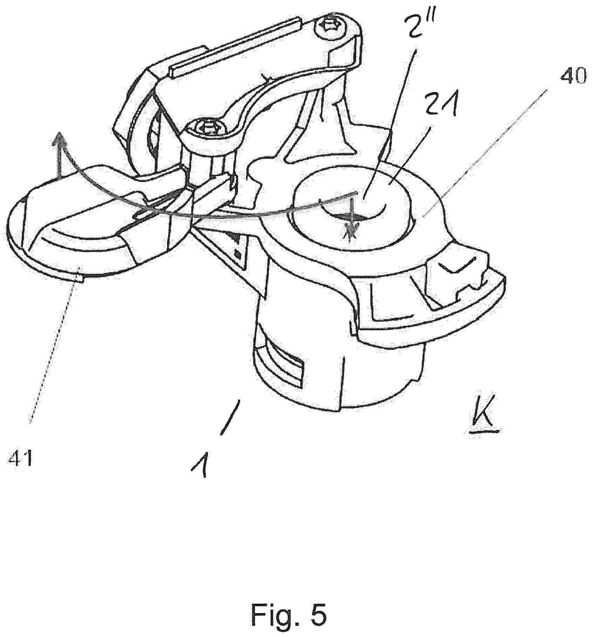

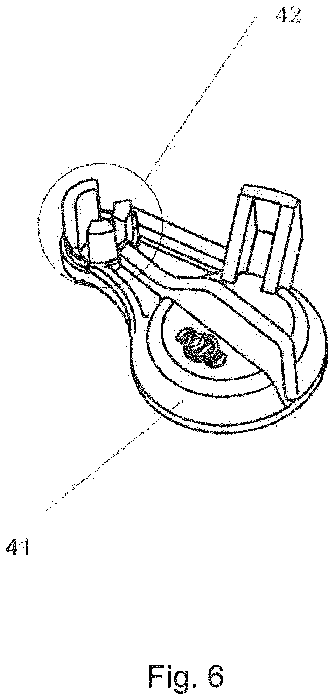

**Fig. 5** zeigt eine weitere perspektivische Ansicht auf das Kupplungssystem gemäß Fig. 1 und **Fig. 6** eine perspektivische Ansicht auf eine Kappe des Kupplungssystems gemäß Fig. 1.

In Fig. 5 ist der Kappe 41 in einem verschwenkten Zustand gezeigt, in dem die Verbindungsfläche 40 des zweiten Koppelungsanschlusses 2" freigegeben ist. Auch die Dichtungsfläche 21 ist ersichtlich.

Wie aus Fig. 6 ersichtlich ist, kann die Kappe 41 um eine Lagerungshülse 42 verschwenkt werden.

Die Funktion der Kupplungssystems K lässt sich wie folgt beschreiben:
Durch die vormontierte Filtereinheit 10 kann vor dem Einbau ins Kupplungskopfgehäuse 2 kontrolliert oder auch z.B. bezüglich der Öffnungsdrücke der Lippenventile ausgebildet durch die Ventillippen 24, 25 im Zusammenhang mit den Bypassventil-Durchbrüchen 15, 16 getestet werden.

Für eine Reinigung des Siebs 14 oder irgendwelche Beschädigung kann die Filtereinheit einfach ausgebaut, gereinigt, aber auch getauscht werden.

So ist kein weiterer (Schalt-)Deckel sowie eine gesonderte Deckelbefestigung (üblicherweise Verschraubung) nötig, was zu einer material-, gewicht- und montagezeitsparende Ausbildung führt.

Die Elastomer-Einheit 20 ist so ausgebildet, dass ihre eine Fläche 21 als Dichtungsfläche zum anhängerseitigen Kupplungskopf, ihre weitere Fläche 22 als Dichtungsfläche zu der Bohrung 3 des Kupplungskopfgehäuses 2 und die wenigstens zwei Dichtungslippen 24, 25 als Ventillippen für die Bypass-Ventile in beiden Richtungen dienen.

So stellt im montierten Zustand des Kupplungssystems K ein Teil der Filtereinheit 10, nämlich die Elastomer-Einheit 20, die Dichtungsfläche 21 des Koppelungsanschlusses 2" bereit.

Dadurch wird es einfach möglich, die vielbeanspruchte Dichtungsfläche 21, die als Dichtungsfläche des Koppelungsanschlusses 2" dient, einfach bei etwaig auftretender Beschädigung wechseln zu können. So ist es einfach, im Betrieb stets die Dichtigkeit des Koppelungsanschlusses 2" sicherstellen zu können.

Die Dichtungsfläche 21 ist deshalb hoch beansprucht, weil diese Fläche Bewegungen und Reibung während des Kupplungsvorgangs bzw. während des Entkupplungsvorgangs von zugfahrzeugseitigen Kupplungskopf und anhängerseitigem Kupplungskopf ausgesetzt ist. Dadurch, dass die Dichtungsfläche 21 Teil der Elastomereinheit 20 ist und werkzeuglos durch Entnahme der Filtereinheit 10 aus dem Kupplungskopfgehäuse 2 entnommen werden kann, ist ein einfacher und werkzeugloser Austausch z.B. durch den Fahrer des Nutzfahrzeugs möglich.

Die Elastomer-Einheit 20 ist lediglich auf den Filterträger 11 aufgesteckt und kann daher einfach abgezogen werden. Sodann kann eine neue Elastomer-Einheit 20 auf den Filterträger 11 aufgesetzt werden.

Die Ringnut 23 in der Elastomer-Einheit 20 positioniert zusammen mit der Ringrippe 12 des Filterträgers 11 die Elastomer-Einheit 20 axial.

Die Elastomer-Einheit 20 ist zudem auch gegen Verdrehung gesichert, und zwar z.B. durch die zahnförmige Ausbildung der oberen Kontaktfläche 13 des Filterträgers 11 sowie durch die entsprechende Ausbildung der inneren Fläche 26 der Elastomer-Einheit 20. Dies ermöglicht eine gewicht-, material- und montagezeitsparende Ausbildung. Außerdem sind die Abmessungen und die Positionen der Funktionsflächen werkzeuggebunden und genau reproduzierbar.

Das Verschlussstück 30 und der Filterträger 11, mit oder ohne Sieb 14, sind als ein Stück bzw. einstückig hergestellt oder wenigstens axial zusammengebaut.

Dadurch kann die Höhe der Filtereinheit 10 gut kontrolliert werden, d.h. hierdurch wird sichergestellt, dass die Dichtfläche 21 im montierten Zustand richtig positioniert ist.

Nicht zuletzt dadurch kann bei Reinigung des Filters oder bei anderen Fehlern Filtereinheit 10 einfach zusammen ausgebaut, gereinigt oder getauscht werden.

Das Verschlussstück 30 ist mit lösbarer Verbindung, wie z.B. Bajonett- oder GewindeVerbindung, im Kupplungskopfgehäuse 2 fixiert und axial positioniert. Das Verschlussstück 30 ist formschlüssig in der Einsatzausnehmung 3 lösbar befestigbar.

In den Figuren ist nur die Bajonett-Verbindung dargestellt, d.h., dass das Verschlussstück 30 und die Einsatzausnehmung 3 nach Art eines Bajonettverschlusses miteinander verbindbar sind.

Grundsätzlich ist jegliche Art von lösbarer Verbindung denkbar. Insbesondere sind werkzeuglos zu öffnende Verbindungen vorteilhaft.

Die Bajonett-Verbindung ist in einer speziellen Form zwischen dem Gehäuse 2 und dem Verschlussstück 30 ausgebildet, um eine Vorspannfeder (Metallfeder) zu sparen. Auf dem Verschlussstück 30 sind die wenigstens eine teilweise ringlaufende Hebung 31 mit Schräge 32 und je zwei Sicherungsansätze 33, 33' ausgebildet.

In der Gehäusebohrung 3 ist wenigstens eine teilweise ringlaufende Hebung 4, die kürzer ist, als die Entfernung zwischen den zwei Sicherungsansätzen 33, 33'. Es ist in der Gehäusebohrung 3 die Auflagehebung 4 und die separate Nase 5 mit Schräge 6 ausgebildet.

Beim Einlegen des Verschlussstücks 30 bzw. der kompletten Filtereinheit 10 in das Kupplungskopfgehäuse 2 wird die Filtereinheit 10 in die Gehäusebohrung 3 eingeschoben und soweit verdreht, dass die zwei Schrägen 6, 32 das Verschlussstück 30 axial so positionieren, dass die zwei Hebungen 4, 31 aufeinander anliegen. In dieser Position verhindern die zwei Sicherungsansätze 33, 33' zusammen mit der Hebung 4 in der Gehäusebohrung 3 ein ungewünschtes Öffnen. Auf dem Verschlussstück 30 ist weiterhin der O-Ring 34 positioniert, um die Dichtheit nach außen hin zu sichern.

Besonders vorteilhaft ist, dass die Verbindung lösbar ist und dass die gesicherte Bajonett-Verbindung ohne eingebaute Feder auskommt.

Der Filterträger 11 wird zusammen mit dem Sieb 14 hergestellt oder das Sieb 14 wird nachträglich eingebaut und im Filterträger 11 fixiert. Das Sieb 14 kann in den Filterträger 11 eingeklebt oder alternativ mit dem Filterträger 11 verschmolzen sein. Denkbar ist auch, dass das Sieb 14 mit dem Filterträger 11 mitgespritzt (Herstellung durch Co-Molding) wird.

Die Ringrippe 12 des Filterträgers hat nicht nur die Aufgabe, die Elastomer-Einheit 20 axial zu positionieren, sondern auch die Aufgabe, zusammen mit dem inneren Durchmesser der Gehäusebohrung 3 eine Vorspannung der Elastomer-Einheit 20 und damit eine sichere Dichtheit zu sichern. Der Filterträger 11 hat wenigstens zwei Durchbrüche 15, 16 und innen und außen Flächen 17, 18, die als Ventilsitze dienen.

Die Lippenventile funktionieren derart, wie es beispielsweise in der DE 10 2009 036 619 A1 beschrieben ist. Insbesondere wird hierdurch erreicht, dass die Bypassventildurchbrüche 15, 16 und die Bypassventilsitze 17, 18 und die Elastomereinheit 20 mit den Ventillippen 24, 25 ein Bypassventil ausbilden, das bei einer ein vorgegebenes Maß an Verunreinigung der Filtereinheit 10 den Bypassventildurchbruch 15, 16 freigibt.

Die Verbindungsfläche 40 des Kupplungskopfes ist außer Betrieb mit einer Kappe 41 geschützt (vgl. Fig. 1). Die Kappe 41 ist aus elastischem Kunststoffmaterial ausgebildet und die Lagerungshülse 42 ist geschlitzt ausgebildet, ist um die Flexibilität zu sichern. Dadurch wird ein sicheres Schließen und Öffnen ohne Vorspannfeder möglich.

### BEZUGSZEICHENLISTE

- 1: Kupplungskopf
- 2: Gehäuse; Kupplungskopfgehäuse
- 2': erster Koppelungsanschluss
- 2": zweiter Koppelungsanschluss
- 3: Einsatzausnehmung; Gehäusebohrung
- 4: Auflagehebung
- 5: Nase
- 6: Schräge
- 7: Pneumatikkanal
- 10: Filtereinheit
- 11: Filterträger
- 11a: Steg
- 12: Ringrippe
- 13: Kontaktfläche
- 14: Sieb
- 15: Durchbruch
- 16: Durchbruch
- 17: Fläche; Sitz
- 18: Fläche; Sitz
- 20: Elastomer-Einheit
- 21: Dichtfläche
- 22: Fläche
- 23: Ringnut
- 24: Dichtungslippe; Ventilippe
- 25: Dichtungslippe; Ventillippe
- 26: innere Fläche
- 30: Verschlussstück
- 31: Hebung
- 32: Schräge
- 33: Sicherungsansatz
- 33': Sicherungsansatz
- 34: O-Ring
- 40: Verbindungsfläche
- 41: Kappe
- 42: Lagerungshülse
- K: Kupplungssystem

## Patentansprüche

1. Kupplungssystem (K), insbesondere Kupplungssystem (K) zur pneumatischen Verbindung einer pneumatischen Bremsanlage eines Zugfahrzeuges und eines Anhängers, aufweisend einen Kupplungskopf (1) mit einem Kupplungskopfgehäuse (2), wobei das Kupplungskopfgehäuse (2) wenigstens einen ersten Koppelungsanschluss (2'), wenigstens einen zweiten Koppelungsanschluss (2") und wenigstens eine Einsatzausnehmung (3) aufweist, die gesondert in Bezug auf den ersten Koppelungsanschluss (2') und den zweiten Koppelungsanschluss (2") im Kupplungskopfgehäuse (2) angeordnet ist, und wobei das Kupplungssystem (K) weiter eine in die Einsatzausnehmung (3) lösbar einsetzbare Filtereinheit (10) aufweist, wobeiim montierten Zustand des Kupplungssystems (K) ein Teil der Filtereinheit (10) eine Dichtungsfläche (21) eines Koppelungsanschlusses (2") bereitstellt, **dadurch gekennzeichnet, dass** die Filtereinheit (10) einen Filterträger (11) mit einem Sieb (14), mit wenigstens einem Bypassventildurchbruch (15, 16) und wenigstens einem Bypassventilsitz (17, 18), sowie weiter wenigstens eine Elastomereinheit (20) mit Ventillippen (24, 25) und wenigstens ein Verschlussstück (30) aufweist.

2. Kupplungssystem (K) nach Anspruch 1,
**dadurch gekennzeichnet, dass**
die Filtereinheit (10) eine vormontierte Filtereinheit (10) ist, insbesondere wobei die Filtereinheit (10) eine fertig für den Einsatz in die Einsatzausnehmung (3) vormontierte Filtereinheit (10) ist.

3. Kupplungssystem (K) nach Anspruch 1 oder 2,
**dadurch gekennzeichnet, dass**
der Kupplungskopf (K) keine Metallfeder aufweist.

4. Kupplungssystem (K) nach einem der vorhergehenden Ansprüche,
**dadurch gekennzeichnet, dass**
einer der beiden Koppelungsanschlüsse (2") und die Einsatzausnehmung (3) koaxial angeordnet sind.

5. Kupplungssystem (K) nach einem der vorhergehenden Ansprüche,
**dadurch gekennzeichnet, dass**
die Elastomereinheit (20) die Dichtungsfläche (21) ausbildet.

6. Kupplungssystem (K) nach einem der vorhergehenden Ansprüche,
**dadurch gekennzeichnet, dass**
das Verschlusstück (30) formschlüssig in der Einsatzausnehmung (3) lösbar befestigbar ist.

7. Kupplungssystem (K) nach Anspruch 6,
**dadurch gekennzeichnet, dass**
das Verschlussstück (30) und die Einsatzausnehmung (3) nach Art eines Bajonettverschlusses miteinander verbindbar sind.

8. Kupplungssystem (K) nach einem der vorhergehenden Ansprüche,
**dadurch gekennzeichnet, dass**
der Bypassventildurchbruch (15, 16) und der Bypassventilsitz (17, 18) und die Elastomereinheit (20) mit den Ventillippen (24, 25) ein Bypassventil ausbilden, das bei einer Verunreinigung der Filtereinheit (10), die ein vorgegebenes Maß an Verunreinigung der Filtereinheit (10) übersteigt, den Bypassventildurchbruch (15, 16) freigibt.

## Claims

1. A coupling system (K), in particular a coupling system (K) for pneumatically connecting a pneumatic brake system of a towing vehicle and a trailer, having a coupling head (1) comprising a coupling head housing (2), the coupling head housing (2) having at least one first coupling connector (2'), at least one second coupling connector (2") and at least one insertion recess (3) that is arranged separately in the coupling head housing (2) in relation to the first coupling connector (2') and to the second coupling connector (2"), and the coupling system (K) also having a filter unit (10) that can be inserted detachably into the insertion recess (3), a part of the filter unit (10) providing a sealing surface (21) of a coupling connector (2") when the coupling system (K) is fitted, **characterised in that** the filter unit (10) has a filter carrier (11) comprising a sieve (14), at least one bypass valve aperture (15, 16) and at least one bypass valve seat (17, 18) and also comprises at least one elastomer unit (20) comprising valve lips (24, 25) and at least one locking piece (30).

2. A coupling system (K) according to claim 1,
**characterised in that**
the filter unit (10) is a pre-assembled filter unit (10), the filter unit (10) being in particular a preassembled filter unit (10) ready for insertion into the insertion recess (3).

3. A coupling system (K) according to claim 1 or 2,
**characterised in that**
the coupling head (K) contains no metal spring.

4. A coupling system (K) according to any one of the preceding claims,
**characterised in that**
one of the two coupling connectors (2") and the insertion recess (3) are arranged coaxially.

5. A coupling system (K) according to any one of the preceding claims,
**characterised in that**
the elastomer unit (20) forms the sealing surface (21).

6. A coupling system (K) according to any one of the preceding claims,
**characterised in that**
the locking piece (30) can be fixed detachably in a form fit in the insertion recess (3).

7. A coupling system (K) according to claim 6,
**characterised in that**
the locking piece (30) and the insertion recess (3) can be connected to one another in the manner of a bayonet lock.

8. A coupling system (K) according to any one of the preceding claims,
**characterised in that**
the bypass valve aperture (15, 16), the bypass valve seat (17, 18) and the elastomer unit (20) with valve lips (24, 25) form a bypass valve that uncovers the bypass valve aperture (15, 16) when the contamination of the filter unit (10) exceeds a predetermined value for the contamination of the filter unit (10).

## Revendications

1. Système (K) d'attelage, notamment système (K) d'attelage pour la liaison pneumatique d'un système pneumatique de frein d'un véhicule tracteur et d'une remorque, comportant une tête (1) d'attelage ayant un boîtier (2) de tête d'attelage, le boîtier (2) de tête d'attelage ayant au moins un premier raccord (2') d'attelage, au moins un deuxième raccord (2") d'attelage et au moins un évidement (3) d'insertion, qui est disposé de manière séparé du premier raccord (2') d'attelage et du deuxième raccord (2") d'attelage dans le boîtier (2) de la tête d'attelage, et dans lequel le système (K) d'attelage a, en outre, une unité (10) de filtre pouvant être insérée de manière amovible dans l'évidement (3) d'insertion, dans lequel, à l'état monté du système (K) d'attelage, une partie de l'unité (10) de filtre procure une surface (21) d'étanchéité d'un raccord (2") d'attelage, **caractérisé en ce que** l'unité (10) de filtre a un support (10) de filtre ayant un tamis (14), au moins un perçage (15, 16) de soupape de dérivation et au moins un siège (17, 18) de soupape de dérivation, ainsi qu'en outre au moins une unité (20) d'élastomère ayant des lèvres (24, 25) de soupape et au moins un obturateur (30).

2. Système (K) d'attelage suivant la revendication 1, **caractérisé en ce que**
l'unité (10) de filtre est une unité (10) de filtre prémontée, dans lequel, notamment, l'unité (10) de filtre est une unité (10) de filtre prémontée prête à l'utilisation dans l'évidement (3) d'insertion.

3. Système (K) d'attelage suivant la revendication 1 ou 2, **caractérisé en ce que**
le tête (K) d'attelage n'a pas de ressort métallique.

4. Système (K) d'attelage suivant l'une des revendications précédentes,
**caractérisé en ce que**
l'un des deux raccords (2") d'attelage et l'évidement (3) d'insertion sont disposés coaxialement.

5. Système (K) d'attelage suivant l'une des revendications précédentes,
**caractérisé en ce que**
l'unité (20) d'élastomère constitue la surface (21) d'étanchéité.

6. Système (K) d'attelage suivant l'une des revendications précédentes,
**caractérisé en ce que**
l'obturateur (30) peut être fixé de manière amovible à complémentarité de forme dans l'évidement (30) d'insertion.

7. Système (K) d'attelage suivant la revendication 6, **caractérisé en ce que**
l'obturateur (30) et l'évidement (3) d'insertion peuvent être reliés l'un à l'autre à la manière d'une fermeture à baïonnette.

8. Système (K) d'attelage suivant l'une des revendications précédentes,
**caractérisé en ce que**
le perçage (15, 16) de soupape de dérivation et le siège (17, 19) de soupape de dérivation et l'unité (20) d'élastomère ayant les lèvres (24, 25) de soupape constituent une soupape de dérivation, qui, si une pollution de l'unité (10) de filtre dépasse une mesure donnée à l'avance de pollution de l'unité (10) de filtre, dégage le perçage (15, 16) de soupape de dérivation.
